**Europäisches Patentamt**

**European Patent Office**

**Office européen des brevets**

(19)

(11) Veröffentlichungsnummer : **0 193 119**
**B1**

(12)

# EUROPÄISCHE PATENTSCHRIFT

(45) Veröffentlichungstag der Patentschrift : 25.05.88

(51) Int. Cl.⁴ : **B 65 G 69/28**

(21) Anmeldenummer : **86102240.8**

(22) Anmeldetag : **20.02.86**

(54) Überfahrbrücke.

(30) Priorität : **26.02.85 DE 3506723**

(43) Veröffentlichungstag der Anmeldung : **03.09.86 Patentblatt 86/36**

(45) Bekanntmachung des Hinweises auf die Patenterteilung : **25.05.88 Patentblatt 88/21**

(84) Benannte Vertragsstaaten : **AT BE CH DE FR GB IT LI LU NL SE**

(56) Entgegenhaltungen :
**DE-A- 2 218 625**
**US-A- 2 473 126**
**US-A- 3 018 496**
**US-A- 3 665 537**
**US-A- 3 794 193**

(73) Patentinhaber : **Alten, Kurt**
**Ringstrasse 14**
**D-3015 Wennigsen (DE)**

(72) Erfinder : **Alten, Kurt**
**Ringstrasse 14**
**D-3015 Wennigsen (DE)**

(74) Vertreter : **Depmeyer, Lothar**
**Auf der Höchte 30**
**D-3008 Garbsen 1 (DE)**

## Beschreibung

Die Erfindung betrifft eine zum Überbrücken von Eisenbahngleisen dienende Überfahrbrücke mit einer schwenkbar gelagerten Brückenplatte nach dem Gattungsbegriff des 1. Patentanspruches.

Bei den bekannten Überfahrbrücken dieser Ausbildung ist das Fahrwerk so ausgebildet, dass es nicht nur die senkrechten Stützkräfte bei der in der Ruhelage und in der Wirklage befindlichen Brückenplatte aufnehmen muss, vielmehr muss dieses Fahrwerk auch das Kippmoment aufnehmen, dass sich beim Hochschwenken und beim Herunterklappen der Brückenplatte ergibt. Die dabei auftretenden Kräfte sind aber vergleichsweise gross, weil die Brückenplatten für den hier zutreffenden Anwendungsfall über eine erhebliche Länge verfügen müssen. Diese Voraussetzungen erfordern einen bedeutenden technischen Aufwand zur Ausbildung und Lagerung des Fahrwerks.

Diese Nachteile sollen aufgrund der Erfindung vermieden werden. Demgemäss soll ein in seinem Aufbau vereinfachtes, in seinen Abmessungen — insb. Tiefenabmessungen — verringertes, betriebssicheres Fahrwerk erzielt werden.

Dieses wird aufgrund der Erfindung dadurch erreicht, dass das Fahrwerk mit einem sich nach oben erstreckenden Ausleger versehen wird, der oberhalb der Schwenkachse der Brückenplatte kippsicher in einer Führungsschiene gehalten ist.

Die Erfindung geht von der Erkenntnis aus, dass beim Eisenbahnschienenbetrieb in aller Regel keine Platzbeschränkungen nach oben hin, wohl aber quer hierzu bestehen. Wird nunmehr ein nach oben hin sich erstreckender Ausleger benutzt, so kann ein nur für senkrechte und für im Bodenbereich waagerechte Kräfte bemessenes Fahrwerk verwendet werden, das eine nur geringe Tiefenerstreckung hat und sogar noch zwischen einer Begrenzungsmauer eines Gebäudes' oder einer Halle einerseits und nahe daran befindlichen Schienen angeordnet werden kann. Zweckmässigerweise erhält dieser Ausleger eine Länge, die im wesentlichen der Länge der Brückenplatte entspricht. Dementsprechend wird auch mit Vorteil die Führungsschiene für den Ausleger in den Bereich gelegt, der durch die Spitze der hochgeklappten Brückenplatte bestimmt ist. Der Ausleger mit den Führungsmitteln befindet sich also in einem Höhenbereich, der ohnehin für die hochgeklappte Brückenplatte erforderlich ist.

Weitere Einzelheiten der Erfindung werden anhand der Zeichnung erläutert, in der ein Ausführungsbeispiel der Erfindung dargestellt ist.

Es zeigen :

Fig. 1   eine Überfahrbrücke für Eisenbahngleise in der Wirkstellung, und zwar in der Seitenansicht (in Richtung der Eisenbahnschienen gesehen),

Fig. 2   die Überfahrbrücke gemäss Fig. 1 in der Draufsicht und,

Fig. 3   die Überfahrbrücke gemäss Fig. 1 mit hochgeklappter Brückenplatte, und zwar quer zu den Eisenbahnschienen gesehen.

Zwischen einer Rampe 1 mit der Oberfläche 2 und der Aussenwand 3 einer Halle befinden sich Gleise 4. Die miteinander gekuppelten Eisenbahnwagen 5 haben Container 6 geladen, die nur an ihrer Stirnseite 7 zugänglich sind.

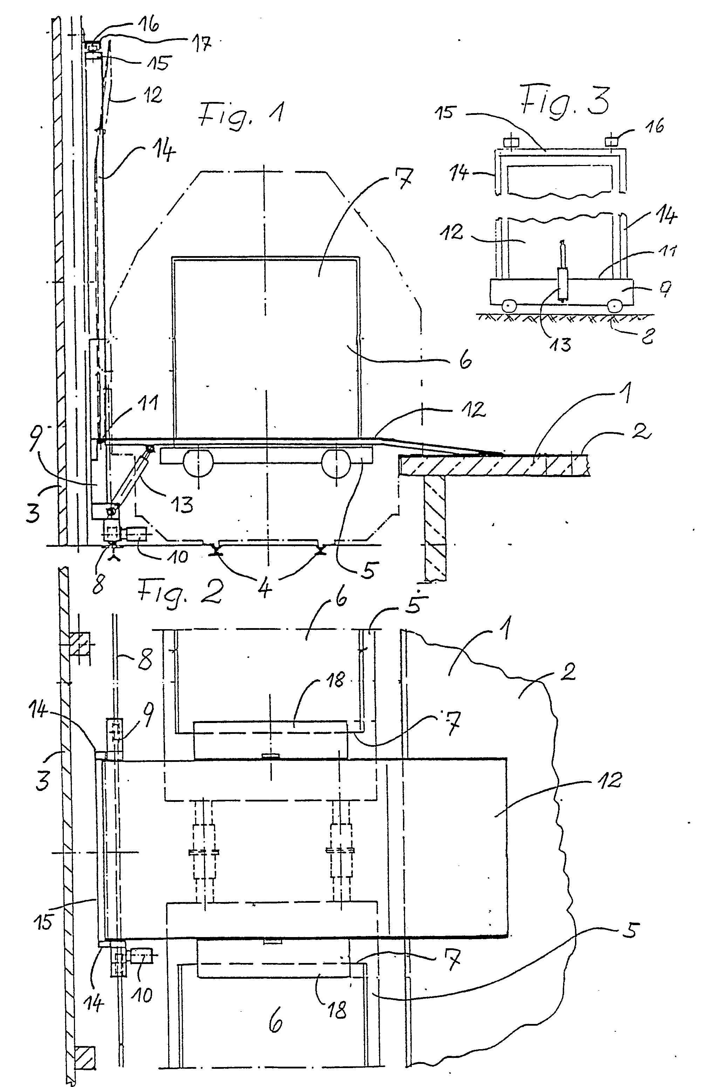

Parallel zu den Schienen der Gleise 4 in deren Höhe liegt eine untere Führungsschiene 8 für ein Fahrwerk 9, das einen elektrischen Antriebsmotor 10 hat. Etwa in Höhe diese Fahrwerks 9 befindet sich eine waagerechte Schwenkachse 11 für eine Brückenplatte 12, die durch einen Arbeitszylinder 13 von der Wirkstellung gemäss Fig. 1, in der sie vorne auf der Oberfläche 2 aufliegt, in die senkrechte Ruhestellung (gestrichelt wiedergegeben) geklappt werden kann, und zwar auch in umgekehrter Richtung.

Zu beiden Seiten nahe an der Brückenplatte 12 befinden sich steife Ausleger 14, die unten mit dem Fahrwerk 9 und oben durch eine waagerechte Traverse 15 miteinander verbunden sind, die in Höhe der Spitze der eingeklappten Brückenplatte 12 angeordnet ist. Die Traverse 15 dient zur Lagerung von zwei Rollen 16 mit senkrechter Drehachse. Die Rollen 16 sind in einer oberen Führungsschiene 17 geführt in der Weise, dass die Ausleger 14 bzw. das Fahrwerk 9 gegen Kippen gesichert sind.

Zu beiden Seiten der Brückenplatte 12 liegen Überladebleche 18, um den Zugang zu den Containern 6 zu ermöglichen.

Die beiden Ausleger 14, die Traverse 15 und die obere Führungsschiene 17 befinden sich in dem Bereich der Halle, der ohnehin für die hochgeklappte Brückenplatte 12 erforderlich ist. Daher erfordert die erfindungsgemässe Anordnung keinen zusätzlichen Raum. Indessen kann das Fahrwerk 9 sehr schmal gehalten werden ; die untere Führungsschiene 8 kann daher auch sehr nahe an einer Aussenwand 3 angeordnet werden. Besonders vorteilhaft ist dabei auch die Bildung des aus Fig. 3 erkennbaren Rahmens, der vom Fahrwerk 9, den beiden Auslegern 14 und der Traverse 15 gebildet wird. Er nimmt die Brückenplatte 12 in sich auf und vermittelt der gesamten Konstruktion eine besonders gute Festigkeit.

## Patentansprüche

1. Zum Überbrücken von Eisenbahngleisen (4) dienende Überfahrbrücke mit einer Brückenplatte (12), die von einer etwa senkrechten Ruhestellung aus um eine hinter den Eisenbahngleisen (4) befindliche, waagerechte Schwenkachse (11) in die etwa waagerechte Wirklage klappbar ist, in der sie mit ihrem freien Ende auf einer vor den Eisenbahngleisen (4) befindlichen Rampe (2) aufliegt, wobei zur schwenkbaren Lagerung der Brückenplatte (12) ein parallel zur den Eisenbahngleisen (4) bewegbares Fahrwerk (9) dient, dem eine parallel zu den Eisenbahngleisen (4) verlaufende Führungsschiene (8) zugeordnet ist, dadurch gekennzeichnet, dass das Fahrwerk (9) zu beiden Seiten je einen an seinem oberen Ende in einer zweiten Führungsschiene (17) geführten, sich vom Fahrwerk (9) aus nach oben erstreckenden, kippsicher gehaltenen Ausleger (14) hat, die beiden Ausleger (14) unter Bildung eines steifen Rahmens am freien Ende durch eine Traverse (15) verbunden sind und die Brückenplatte (12) an dem Fahrwerk (9) gelagert ist, wobei sich die für das Fahrwerk (9) vorgesehene Führungsschiene (8) zwischen einer Aussenwand einer Halle und den Eisenbahngleisen (4) in deren Höhe und die zweite Führungsschiene (17) an der Aussenwand der Halle befinden.

2. Überfahrbrücke nach Anspruch 1, dadurch gekennzeichnet, dass die Traverse (15) etwa in Höhe der Spitze der in der Ruhelage befindlichen Brückenplatte (12) angeordnet ist.

3. Überfahrbrücke nach Anspruch 1 und 2, dadurch gekennzeichnet, dass die Traverse (15) zur Lagerung der Führungsrollen (16) für die zweite Führungsschiene (17) dient.

4. Überfahrbrücke nach Anspruch 1, dadurch gekennzeichnet, dass die in der Ruhestellung befindliche Brückenplatte (12) im wesentlichen in der durch den steifen Rahmen bestimmten Ebene angeordnet ist.

**Claims**

1. Bridging device serving to bridge railway lines (4) and having a bridge plate (12) which is pivotable out of a substantially vertical inoperative position about a horizontal pivotal axle (11), situated behind the railway lines (4), into the substantially horizontal operative position in which it lies with its free end on a ramp (2) disposed in front of the railway lines (4), wherein a chassis (9) is used for the pivotable mounting of the bridge plate (12), the chassis being displaceable parallel to the railway lines (4) and having associated therewith a guide rail (8) which extends parallel to the railway lines (4), characterised in that the chassis (9) has on each side an arm (14) which is guided at its upper end in a second guide rail (17), the arm extending upwardly from the chassis (9) and being kept stable, the two arms (14) are connected to their free end by a crosspiece member (15) to form a rigid frame, and the bridge plate (12) is mounted on the chassis (9), wherein the guide rail (8), which is provided for the chassis (9), is disposed between an outside wall of a hall and the railway lines (4) on a level therewith and the second guide rail (17) is disposed on the outside wall of the hall.

2. Bridging device according to claim 1, characterised in that the crosspiece member (15) is disposed substantially on a level with the top of the bridge plate (12) in the inoperative position.

3. Bridging device according to claims 1 and 2, characterised in that the crosspiece member (15) is used for mounting the guide rollers (16) for the second guide rail (17).

4. Bridging device according to claim 1, characterised in that the bridge plate (12), in the inoperative position, is substantially disposed in the plane determined by the rigid frame.

**Revendications**

1. Passerelle de transbordement, servant à passer au-dessus de voies de chemin de fer (4) et comprenant un tablier (12) qui peut se rabattre autour d'un axe de basculement (11) horizontal et se trouvant derrière les voies de chemin de fer (4), d'une position de repos sensiblement verticale à une position active sensiblement horizontale, en laquelle il repose par son extrémité libre sur une rampe (2) se trouvant devant les voies de chemin de fer (4), un chariot (9), déplaçable parallèlement aux voies de chemin de fer (4) et auquel est associé un rail de guidage (8) parallèle aux voies de chemin de fer (4), servant à monter le tablier (12) à basculement, caractérisée en ce que le chariot (9) a, des deux côtés, un bras (14), guidé par son extrémité supérieure dans un second rail de guidage (17), s'étendant vers le haut à partir du chariot (9) et maintenu de manière à ne pas basculer, les deux bras (14) étant reliés, en formant un cadre rigide, à leur extrémité libre par une traverse (15) et le tablier (12) étant monté sur le chariot (9) se trouvant, entre un mur extérieur d'un hangar et les voies de chemin de fer (4), au niveau de celles-ci et le second rail de guidage (17) se trouvant sur le mur extérieur du hangar.

2. Passerelle de transbordement suivant la revendication 1, caractérisée en ce que la traverse (15) est disposée sensiblement au niveau du sommet du tablier (12) se trouvant en la position de repos.

3. Passerelle de transbordement suivant la revendication 1 ou 2, caractérisée en ce que la traverse (15) sert au montage des galets de guidage (16) du second rail de guidage (17).

4. Passerelle de transbordement suivant la revendication 1, caractérisée en ce que le tablier (12), se trouve en la position de repos, est disposé sensiblement dans le plan défini par le cadre rigide.

0 193 119

Fig. 1

Fig. 3

Fig. 2